(19) Europäisches Patentamt / European Patent Office / Office européen des brevets

(11) **EP 2 630 746 B1**

(12) **FASCICULE DE BREVET EUROPEEN**

(45) Date de publication et mention
de la délivrance du brevet:
**08.05.2019 Bulletin 2019/19**

(51) Int Cl.:
*H04L 9/32* *(2006.01)*     *G06Q 20/32* *(2012.01)*
*G06Q 20/38* *(2012.01)*

(21) Numéro de dépôt: **11787705.0**

(22) Date de dépôt: **14.10.2011**

(86) Numéro de dépôt international:
**PCT/FR2011/052408**

(87) Numéro de publication internationale:
**WO 2012/052664 (26.04.2012 Gazette 2012/17)**

(54) **PROCEDE ET SYSTEME D'AUTHENTIFICATION**

AUTHENTIFIKATIONSVERFAHREN UND -SYSTEM

AUTHENTICATION METHOD AND SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.10.2010 FR 1058585**

(43) Date de publication de la demande:
**28.08.2013 Bulletin 2013/35**

(73) Titulaire: **WORLDLINE
95870 Bezons (FR)**

(72) Inventeur: **CAUCHIE, Stéphane
F-41000 Blois (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
**EP-A2- 2 120 175**     **WO-A1-2007/068099**
**WO-A2-2008/016752**     **US-A1- 2009 254 485**

**Description**

**DOMAINE TECHNIQUE DE L'INVENTION**

L'invention se rapporte à un procédé et système d'authentification d'une entité généralement nommé Prouveur auprès d'une autre entité nommé Vérifieur, ainsi qu'à un programme d'ordinateur.

L'invention s'inscrit dans le domaine des mécanismes d'authentification permettant de sécuriser l'accès d'un utilisateur à des services.

**ETAT DE LA TECHNIQUE ANTERIEURE**

Les mécanismes d'authentification sont généralement mis en en oeuvre dans le cadre d'accès à des services au travers de canaux de communications dits sécurisés entre des dispositifs aptes à échanger des données.

Dans de tels cas, il est essentiel d'avoir un moyen de reconnaissance mutuelle, à savoir un moyen permettant à l'entité Vérifieur, par exemple un serveur d'authentification, d'authentifier un Prouveur, le terminal d'un l'utilisateur, et de lui permettre ainsi d'avoir accès aux données ou aux services souhaités.

Il existe de nombreux exemples nécessitant la mise en oeuvre de ce type de communication sécurisée. On peut citer, notamment, le cas des terminaux mobiles ou fixes aptes à être utilisés lors de transactions de type bancaire, des distributeurs automatiques de billets, ou encore des décodeurs de télévision à péage ou des droits accès à des ressources ou à des localisations .

Dans ce contexte, on utilise fréquemment des méthodes d'authentification qui sont basées sur des techniques cryptographiques.

L'inconvénient de ces méthodes réside dans le fait que ces deux entités, à savoir le Vérifieur et le Prouveur, doivent coopérer mutuellement et secrètement.

Cette condition n'est pas toujours vérifiée. En effet, une personne mal intentionnée peut se procurer le dispositif de type Vérifieur et l'analyser pour connaître sa structure interne. Ensuite, cette personne est alors techniquement capable de réaliser des faux dispositifs d'authentification, car les clés secrètes sont présentes aux deux extrémités du réseau, à savoir dans le Vérifieur et dans le Prouveur.

Cette personne peut également intercepter et analyser les échanges d'information entre le prouver et le Vérifieur et ensuite essayer de rejouer des authentifications déjà effectuées.

Pour pallier cet inconvénient, on connaît dans l'art antérieur un mécanisme d'authentification de type défi/réponse, dans lequel le Prouveur cherche à assurer au Vérifieur, qu'il est bien celui qu'il prétend être en prouvant qu'il détient un secret.

Pour cela, le Vérifieur soumet un défi au Prouveur qui doit le surmonter. De façon classique, un protocole d'authentification de type défi/réponse comprend un échange de données entre le Vérifieur, par exemple un serveur d'authentification et un Prouveur, par exemple le terminal d'un utilisateur.

Le Prouveur prouve au Vérifieur qu'il connaît le secret que le Vérifieur partage avec l'utilisateur sans envoyer ce secret en clair sur le réseau. Pour cela, le Vérifieur envoie un défi au Prouveur.

Le Prouveur utilise ce défi et le secret fourni par l'utilisateur pour calculer une réponse qu'il retourne au Vérifieur. De son côté le Vérifieur a effectué une opération avec le défi qu'il a expédié au Prouveur et le secret qu'il partage avec l'utilisateur. Il compare alors les résultats et considère que le secret fourni par l'utilisateur est correct lorsque les résultats sont identiques. Le principe du défi/réponse impose que le défi soit unique à chaque authentification de sorte que quelqu'un qui écouterait le canal de communication qui relie le Vérifieur au Prouveur ne puisse pas rejouer les données d'authentification capturées.

On connaît, également une standardisation d'authentification de type défi/réponse, telle que définie par OATH (acronyme anglais de Open AuTHentication ; OCRA basé sur RFC 4226 et défini au lien hypertexte suivant : http://www.ietf.org/id/draft-mraihi-mutual-oath-hotp-variants-11.txt), qui prévoit l'utilisation d'un mot de passe à usage unique (« One Time Password », OTP).

Le document WO 2007/068099 A1 décrit un procédé d'authentification d'un prouveur auprès d'un vérifieur.

Cependant, un inconvénient majeur de tels systèmes est lié au fait que les clés cryptographiques qu'ils mettent en oeuvre peuvent être subtilisées par une personne malveillante qui pourra alors s'authentifier à l'insu de l'utilisateur sans que le Vérifieur ne puisse détecter une telle usurpation.

D'autres systèmes d'authentification sont connus de l'art antérieur comme ceux mettant en oeuvre deux éléments d'authentifications un premier se rapportant à un secret connu de l'utilisateur et un deuxième censé démontrer qu'un dispositif matériel en possession de l'utilisateur participe également à chaque transaction d'authentification. Ainsi l'utilisateur est capable de se prémunir du risque d'usurpation en s'apercevant qu'il n'est plus en possession du dispositif matériel. Cependant, un des inconvénients de ces systèmes est que le secret, généralement dénommé PIN (Personal Identification Number), du au fait des capacités mémorielles de l'humain, a une entropie faible. De plus, une telle authentification est faible car le secret est statique.

**EXPOSE DE L'INVENTION**

L'invention vise à résoudre le problème lié aux difficultés techniques rencontrées afin d'améliorer la sécurisation des mécanismes d'authentification.

L'invention offre l'avantage grâce à un procédé d'encodage et à l'utilisation de protocoles particuliers de proposer un mécanisme d'authentification dynamique et sécurisé, adapté à des canaux de communication compris entre des Prouveurs et un Vérifieur logique ayant des débits de données faibles.

Dans ce dessein, un aspect de l'invention se rapporte à un procédé d'authentification d'un Prouveur auprès d'un Vérifieur comportant des étapes de génération par le Vérifieur d'un défi en fonction d'une transaction donnée et des caractéristiques du Prouveur, et d'envoi de ce défi audit Prouveur, ledit Prouveur est apte à transmettre audit Vérifieur un mot de passe à usage unique résultant de la transformation de la réponse générée par le Prouveur pour ledit défi.

Le mot de passe à usage unique généré dynamiquement est sous un format lisible pour l'utilisateur car il se rapporte à une suite de mots et/ou de chiffres, ou encore d'autres représentations graphiques que l'utilisateur peut aisément mémoriser et par la suite saisir sur le Prouveur en vue de sa transmission au Vérifieur. Le procédé comprend un étape de saisi d'un code PIN par l'utilisateur sur le Prouveur, précédent la génération de la réponse audit défi. L'étape de génération d'une réponse est réalisée à partir d'opérations de calculs effectuées à la fois en fonction du défi reçu, du code PIN saisi et d'au moins un élément de cryptographie.

Selon des modes de réalisation particuliers :

- le procédé comprend :

  • une étape préalable de téléchargement d'un programme d'ordinateur à partir de la sélection d'un lien hypertexte compris dans un message reçu par ledit Prouveur, et
  • une étape d'activation dudit programme d'ordinateur à partir d'éléments cryptographiques du Vérifieur et d'au moins un secret partagé entre le Prouveur et le Vérifieur ;

- le procédé comprend une étape de vérification par le Prouveur, de la validité d'un défi reçu du Vérifieur ;
- le mot de passe à usage unique ensuite généré est cette réponse chiffrée afin d'être transmis au Vérifieur, et
- le secret partagé est un code d'activation généré par le Vérifieur et préalablement transmis au Prouveur.

L'invention se rapporte également à un système d'authentification comportant un Prouveur et un Vérifieur, ledit Vérifieur étant apte à générer un défi en fonction d'une transaction donnée et de caractéristiques du Prouveur, et à transmettre ledit défi au Prouveur, ledit Prouveur étant apte à transmettre audit Vérifieur via un canal de communication un mot de passe à usage unique résultant de la transformation de la réponse générée pour ledit défi par les moyens de traitement du Prouveur.

Selon des modes de réalisation particuliers:

- le Prouveur est choisi parmi l'un des éléments suivants : un terminal mobile, un terminal fixe ou une carte à puce ;
- le Vérifieur est un serveur d'authentification, et
- le canal de communication a un débit de données faible.

L'invention se rapporte également à un programme d'ordinateur comportant des instructions pour l'exécution des étapes du procédé d'authentification lorsque ledit programme est exécuté par les moyens de traitement du Prouveur.

Dans un mode de réalisation, le programme d'ordinateur est prévu pour être téléchargé à partir d'un lien hypertexte de sorte à être archivé dans les moyens de mémoire du Prouveur.

L'invention est définie par les revendications.

**BREVE DESCRIPTION DES FIGURES**

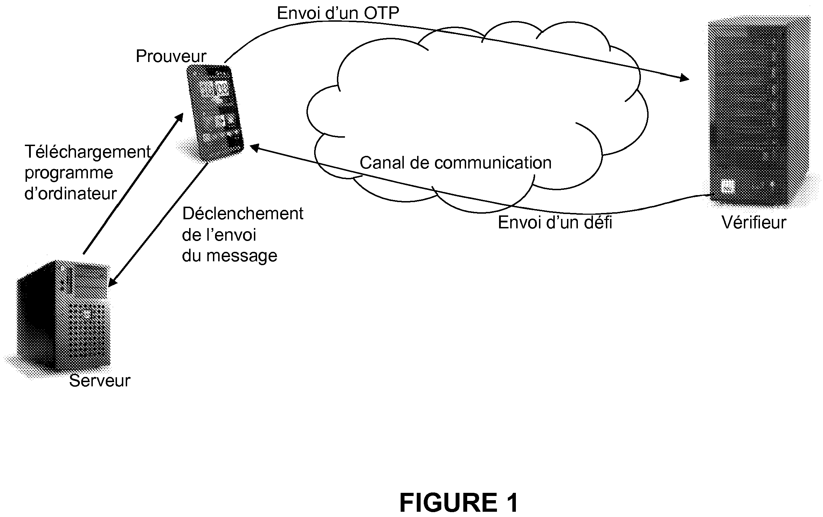

D'autres caractéristiques et avantages de l'invention ressortiront à la lecture de la description qui suit, en référence à la figure annexée, qui illustre à la figure 1, une vue schématique du mécanisme d'authentification selon un mode de réalisation de l'invention.

**DESCRIPTION DETAILLEE D'UN MODE DE REALISATION**

La présente invention prévoit de contrôler l'accès à de nombreux services en conditionnant cet accès au résultat d'une authentification.

Il s'agit dans un tel contexte de vérifier que l'utilisateur qui souhaite accéder à un service est bien celui qu'il prétend être, et qu'il dispose des autorisations nécessaires pour y accéder.

Pour ce faire, le système illustré à la figure 1, comprend un Prouveur et un Vérifieur, tous deux reliés par un canal de communication. Ce système comprend également un serveur associé au Vérifieur à partir duquel le Prouveur est apte à télécharger un programme informatique tel que défini dans la présente invention.

Dans le cadre de l'invention, le Prouveur est considéré comme étant un élément non sécurisé tel qu'un terminal mobile.

Dans le présent mode de réalisation on considère que le Prouveur est un terminal de type équipement de communication mobile ou fixe capable de communiquer de façon bidirectionnelle avec un Vérifieur par voie d'ondes via un réseau de communication mobile (ou cellulaire) et un réseau local sans fil (du type WLAN, Wifi, Bluetooth, Wimax ou infrarouge), ou encore par voie de liaison filaire (liaison coaxial, fibre optique etc..).

Ce terminal se rapporte par exemple à un téléphone mobile (ou cellulaire), un assistant personnel numérique (ou PDA, ou encore Smartphone), un ordinateur portable, une tablette numérique multimédia, ou encore à tout autre équipement informatique portable pouvant archiver et exécuter un programme d'ordinateur.

Ce terminal correspond à tous équipements comprenant :

- au moins un microprocesseur,
- de la mémoire volatile et/ou non volatile et/ou de masse,
- des moyens de saisie, tel qu'un clavier et/ou une souris et/ou écran tactile ou encore à des moyens de commande vocale,
- des moyens d'affichage, et
- des moyens de communication.

Les moyens de communication de ce terminal se rapportent par exemple aux technologies et/ou normes suivantes : Bluetooth et/ou IrDA (Infrared Data Association), et/ou WI-FI (abréviation de wireless fidelity) et/ou Wimax, et GPRS (General Packet Radio Service), GSM, UMTS, HSDPA ou IMS (IP Multimedia Subsystem), ou encore Ethernet.

On notera, en particulier, que ces moyens de communication sont compatibles avec ceux du Vérifieur.

Le microprocesseur et la mémoire volatile et/ou non volatile et/ou de masse contribuent à permettre à ce terminal d'exécuter du code qui se rapporte à un programme d'ordinateur. Ce code peut être du type Java™.

Le Vérifieur est un serveur d'authentification comportant notamment des moyens de traitement adaptés pour la génération de défis et la vérification des réponses, au défis reçus, sous la forme de mots de passe à usage unique plus communément connu sous le terme anglais « One Time Password » (OTP).

Ce Vérifieur comporte également des moyens de communication compatibles avec ceux d'un Prouveur.

Le procédé d'authentification selon l'invention est du type défi/réponse peut fonctionner en mode connecté et non connecté.

On notera que dans le procédé d'authentification selon l'invention l'étape d'enrôlement (ou d'activation) est réalisée nécessairement en mode connecté, ce qui n'est pas obligatoirement le cas des autres étapes successives.

En mode connecté, ce procédé comprend une étape préalable durant laquelle l'utilisateur télécharge un programme d'ordinateur à partir d'un lien hypertexte compris dans un message reçu par le Prouveur.

Ce message peut être par exemple un message de type SMS envoyé par le serveur associé au Vérifieur, lorsque le terminal est un terminal mobile de communication.

Le déclenchement de l'envoi de ce message est initié par l'utilisateur du terminal lors d'une session préliminaire avec un serveur associé au Vérifieur, lors d'une étape d'inscription au service souhaité, donnant à l'utilisateur un accès à une page Web à partir de laquelle il peut effectuer une demande d'obtention de ce programme d'ordinateur. Il reçoit alors simultanément un code d'activation de ce programme, un code de type PIN, ainsi que des éléments d'information lui signalant l'envoi de ce message.

Lors de cette étape de déclenchement, le Vérifieur génère des paramètres utilisés dans le procédé d'authentification, en exécutant à partir de ces moyens de traitement des opérations de calculs aptes à mettre en oeuvre un code se rapportant à une primitive « initSystem » :

$$initSystem: 1^k \rightarrow \pi_{verifier} = \{K_{1...V.verifier} \times W\}$$

Avec :

- k, un paramètre de sécurité ;

- *W*, ensemble de paramètres système, et
- $K_{1,...,V,verifier}$, l'ensemble des éléments cryptographiques de type clefs maître symétriques, et les clefs asymétriques.

L'ensemble *W* de paramètres systèmes définit notamment :

- la taille du dictionnaire de mots et,
- la taille du pool de clefs asymétrique du Prouveur

Lors de cette étape de déclenchement les crédentiels du Vérifieur sont alors initialisés, c'est à dire : les clefs asymétriques assurant la confidentialité et les clefs symétriques maîtres permettant la dérivation des clefs des Prouveurs pour l'authentification de celui-ci et la vérification des défis.

Le programme d'ordinateur téléchargé est par la suite archivé dans les moyens de mémoire du Prouveur lors d'une étape d'installation, et est ensuite activé.

Lors de l'étape d'activation, ou encore d'enrôlement du Prouveur, les moyens de traitement du Prouveur sont aptes à réaliser des opérations de calculs par la mise en oeuvre d'un code de programmation relatif à une primitive « enroll » :

$$enroll: \pi_{verifier} \times \Gamma \rightarrow \left[ K_{1,...,P,prover} \times W \right]$$

Avec :

- $\Pi_{verifier}$, correspond aux paramètres $K_{1,...,V,verifier}$ du Vérifieur,
- *P*, Identifiant du Prouveur que l'on souhaite authentifier (Identifiant servant de données pour la dérivation des clefs cryptographiques symétrique dudit Prouveur)
- *W*, ensemble de paramètres système,
- $K_{1,...,V,prover}$, l'ensemble des éléments cryptographiques de type clefs dérivées symétriques, et les clefs asymétriques.

Ainsi, cette étape d'activation permet d'effectuer l'enrôlement du Prouveur afin qu'il soit connu du Vérifieur et que ce dernier puisse l'authentifier ultérieurement.

Lors de cette étape est définie :

- l'ensemble des clefs symétriques d'authentification respectivement vérification : clef calculée par dérivation à partir des clefs maitres d'authentification, respectivement de vérification, et
- le dictionnaire commun avec le Vérifieur.

Le programme d'ordinateur activé est mis en oeuvre par les moyens de traitement du Prouveur dans le cadre de l'authentification de l'utilisateur du Prouveur afin que celui-ci puisse bénéficier d'un service tel qu'un service de paiement lors d'une transaction.

Le procédé selon l'invention prévoit un protocole particulier d'authentification dans le cadre des échanges de données entre le Vérifieur et le Prouveur.

Pour ce faire, le Vérifieur va générer un défi contextuel à une transaction donnée et fonction des caractéristiques du Prouveur.

Ce contexte transactionnel se rapporte à des données qui contribuent à son unicité (par exemple ; jeton d'horodatage, identifiants des acteurs, valeurs monétaires, valeurs aléatoires, ..).

Les caractéristiques du Prouveur se rapportent à :

- son identifiant (ex : numéro de téléphone dans le cas d'un terminal de téléphonie mobile, ou encore adresse physique MAC) fournie au Vérifieur préalablement.
- clefs publique du Prouveur, et
- des informations relatives aux dispositifs utilisés.

Ce défi généré par le Vérifieur vise à rendre unique la transaction entre ce Vérifieur et le Prouveur.

Le défi est alors généré par le Vérifieur lors d'opérations de calculs réalisées par ses moyens de traitements pour la mise en oeuvre d'un code relatif à la primitive « *genChallenge* » :

$$genChallenge: T \times P \times K \rightarrow Ch$$

Avec :

- T, correspond aux données relatives à la transaction
- *P*, se rapporte à l'identifiant du Prouveur que l'on souhaite authentifier,
- *K*, correspond à un élément cryptographique tel que la clef symétrique d'authentification et de vérification maîtres et.
- *Ch,* se rapporte au défi.

Lors de cet étape un défi est alors généré et pourra être vérifier par le Prouveur comme étant émis par le Vérifieur.

Pour cela le procédé utilise une primitive de dérivation de clef avec la clef maître de vérification et l'identifiant de Prouveur, comme diversifiant, afin de déterminer la clef de vérification dérivée dudit Prouveur.

Cette dernière clef permet alors au Vérifieur de signer (par exemple MAC acronyme de « Message Authentication Code », signifiant code d'authentification de message, par exemple l'algorithme HMC-SHA1, ou tout autre algorithme d'authentification de message) la transaction pour laquelle le Prouveur va s'authentifier.

On comprend que si ce procédé d'authentification était :

- sans défi, alors il y aurait une possibilité de rejeu, et
- sans défi signé alors il y aurait une possibilité d'authentification du Vérifieur, mais un attaquant pourrait demander une authentification à un Prouveur sans que celui-ci ne puisse être sûre de l'identité de l'utilisateur demandeur (Vérifieur ou attaquant). Cela évite des attaques « man in the middle »

Le défi généré par le Vérifieur est ensuite transmis au Prouveur.

Le Prouveur va dans un premier temps vérifier la validité du défi reçu. Pour ce faire les moyens de traitement du Prouveur vont exécuter le code se rapportant à la primitive « *verifChallenge* » :

$$verifChallenge: Ch \times K \rightarrow \{0,1\}$$

Avec :

- *Ch,* le défi reçu par le Prouveur,
- *K,* un élément cryptographique correspondant à la clef symétrique de vérification calculée lors de l'étape d'enrôlement, et
- {O,1}, résultat susceptible d'être obtenu 0 ou 1.

Si le résultat obtenu est 0, alors le défi reçu n'est pas valide dans le cas contraire le résultat sera égal à 1.

Lorsque le défi n'est pas validé la procédure d'authentification est alors avortée. Ainsi, la provenance du défi peut être vérifiée. En effet, le Prouveur vérifie grâce à l'utilisation de la clef symétrique de vérification que le Vérifieur a bien émit le défi en cours.

Lorsque le Prouveur se rapporte à un terminal, ce défi est alors communiqué à l'utilisateur à partir des moyens d'affichage de ce terminal.

Une fois cette vérification effectuée et que le défi est valide, le Prouveur via ses moyens d'affichage invite l'utilisateur à saisir un code. On considère dans le présent mode de réalisation que ce code est par exemple un code de type code PIN.

Cette invitation à saisir un code PIN est réalisée à partir de l'exécution par les moyens de traitement d'un code relatif à la primitive « *askPIN* » :

AskPIN : U → Pwd

Avec :

- U, se rapporte à l'utilisateur, et
- Pwd, le code PIN à saisir.

Cette saisie du code PIN déclenche alors, la génération par les moyens de traitement du Prouveur d'une réponse. Cette réponse se rapporte à des données cryptographiques produites par le Prouveur et correspondant à la réponse attendue par le Vérifieur pour un défi donné.

Cette réponse est donc généré à partir d'opérations de calculs réalisées par les moyens de traitement du Prouveur en exécutant le code relatif à la primitive « *genResponse* » suivante :

$$genResponse: Ch \times Pwd \times K \times W \rightarrow Rp$$

Avec :

- *Ch,* le défi reçu par le Prouveur ;
- Pwd, le code PIN saisi ;
- *K*, un élément cryptographique tel que la clef symétrique d'authentification reçue lors de la phase d'enrôlement ;
- *W*, ensemble de paramètres système, et
- *Rp,* la réponse au défi donné.

On notera que la génération par le Prouveur de la réponse est non « marshallée », c'est-à-dire non transmissible sur le canal de communication en l'état.

Pour ce faire, le Prouveur utilise un procédé de signature ou MAC avec la clef d'authentification (HMAC-SHA1 par exemple). Le dit Prouveur peut alors signer le défit reçu, avec le PIN utilisateur.

Ainsi le procédé d'authentification prend en compte à la fois le défi et le PIN Dans le présent mode de réalisation, le Prouveur n'est pas une carte à puce de type SIM car dans ces conditions le code PIN serait contrôlé localement et donc attaquable.

La réponse obtenue est par la suite transcrite sous le format d'un mot de passe à usage unique, plus communément connu sous le terme anglais « One Time Password » (OTP). Cette transcription en OTP de la réponse permet de convertir la réponse en un format qui puisse être facilement mémorisable par un utilisateur que celle d'une réponse en un format complexe, propre aux données cryptographiques.

Ainsi la transmission par l'utilisateur avec le Prouveur, de cette réponse au format OTP s'en trouve facilitée.

L'encodage de la réponse en OTP est réalisé en un format se rapportant à une suite de mots facilement mémorisable par l'utilisateur ; Ceci a pour effet d'accroître le débit du canal de transmission.

En effet, des études on démontées que l'être humain est capable de retenir une phrase comportant jusqu'à 12 mots. L'OTP généré dans la présente invention est susceptible d'être adapté à cette capacité de l'être humain.

En considérant la taille du canal définie par la fonction :

$$DEBIT: MESSAGE \times P \rightarrow \mathbb{N}^+$$

Les encodages existants dans une forme lisible pour l'utilisateur définissent l'ensemble suivant : *MESSAGE* = {*Numeric,AlphaNumeric*}. Le débit maximal que l'on peut attendre d'un message est défini ci-après :

- *Numeric* : 8 chiffres ont une entropie de 26 bits ;
- *AlphaNumeric* : 8 chiffres ont une entropie de 40 bits

Pour ce faire, une fonction bijective *encode*(□), est mise en oeuvre par le Prouveur prenant en entrée une réponse ($rp \in Rp$) et des paramètres (*W*), qui retourne une phrase ou série de mots respectant la capacité de mémorisation citée plus haut.

La transcription de la réponse en OTP est réalisée à partir de la mise en oeuvre du code relatif à la primitive « *marshall* » lors d'opérations de calculs effectuées par les moyens de traitement du Prouveur.

Cette primitive « *marshall* » est la suivante : *marshall*:$Rp \times W \rightarrow OTP$
Avec :

- *Rp,* la réponse au défi donné,
- *W*, ensemble de paramètres système, et
- *OTP,* mot de passe à usage unique,

Ainsi, la réponse au défi précédemment calculée est encodée en un OTP afin qu'il soit transmissible sur un canal à débit limité.

L'OTP généré est alors transmis au Vérifieur, lors d'une étape de saisie par l'utilisateur de cet OTP sur une interface générée par le Prouveur lors par exemple d'une transaction.

Avant cette transmission au Vérifieur, cet OTP peut être chiffré par exemple à partir d'une clef asymétrique, afin qu'un attaquant ne puisse pas déterminer le PIN au cas où celui-ci aurait accès aux clefs symétriques (attaque sur le dispositif du Prouveur).

Le Prouveur chiffre la réponse grâce au procédé suivant :

- détermination d'une clef de session, à partir de concept de pré « shared key » asymétriques générées par le Prouveur lors de l'enrôlement et complété après chaque usage, les clés publiques sont transmises au Vérifieur en mode connecté. Ces pré « shared key » sont détruites après chaque usage pour éviter les attaques à postériori ;
- décalage de la clef privée du Prouveur d'un delta aléatoire. Ce décalage s'applique sur les bi-clés du fait des propriétés mathématiques des primitives utilisées, et
- chiffrement de la réponse et du delta aléatoire avec un procédé de chiffrement par flux (pas de surchargement).

A réception, le Vérifieur réalise le déchiffrement de cet OTP chiffré et effectue un décodage de l'OTP déchiffré à partir de l'exécution par ses moyens de traitement de la primitive « *unmarshall* » de sorte à obtenir la réponse générée par le Prouveur pour le défi donné :

$$unmarshall: OTP \times W \to Rp$$

Avec :

- P, identifiant du Prouveur (accession aux clefs publique de celui-ci)
- *OTP,* mot de passe à usage unique, et
- *W*, ensemble de paramètres système.

Afin d'obtenir la réponse au défi générée par le Prouveur, le Vérifieur détermine la clef de session utilisée grâce à sa clef privée et la clef publique de l'utilisateur. Cette clef de session sert à déchiffrer la réponse et le delta de décalage. Le delta est appliqué à la clef publique du Prouveur.

On remarquera que toutes les méthodes OTP ont une méthode dite de « unmarshalling ».

Toutefois l'utilisation d'un procédé de chiffrement/déchiffrement/décalage asymétrique permet d'assurer la confidentialité de la réponse (et donc du PIN) en mode déconnecté.

La réponse ainsi obtenue fait alors l'objet d'une vérification afin de valider l'authentification du Prouveur et par extension de l'utilisateur.

Pour ce faire, le Vérifieur effectue des opérations de calculs à partir de ses moyens de traitement visant la mise en oeuvre d'un code relatif à la primitive « verifResponse » :

$$verifResponse: Rp \times Ch \times Pwd \times K \to \{0,1\}$$

Avec :

- *Rp,* la réponse au défi donné
- *Ch,* le défi pour la transaction en cours;
- *K,* un élément cryptographique tel que la clef symétrique d'authentification dérivée pour le Prouveur.
- Pwd, le code PIN saisi par l'utilisateur du Prouveur, et
- {O,1}, résultat susceptible d'être obtenu 0 ou 1.

Si le résultat obtenu est 0, alors le Prouveur n'est pas authentifié, dans le cas contraire le résultat sera égal à 1.

On remarquera, par ailleurs que l'utilisation, dans l'invention, des clefs publiques au niveau du Vérifieur n'engendre aucune surcharge supplémentaire pour un module matériel de sécurité de type HSM générant, stockant et protégant des clefs cryptographiques, du fait de la modification partielle des clefs publiques et privées.

En effet, le chiffrement par clef asymétrique de la réponse protège cette dernière. De plus, le Vérifieur doit stocker des clefs publiques supplémentaires, hors ce sont des clefs publiques donc non sensibles.

Ainsi, il est entendu que l'invention n'est pas limitée aux exemples de réalisation décrits et illustrés. Elle n'est en outre pas limitée à ces exemples d'exécution et aux variantes décrites.

**Revendications**

1. Procédé d'authentification d'un Prouveur auprès d'un Vérifieur comportant des étapes de génération par le Vérifieur d'un défi en fonction d'une transaction donnée et des caractéristiques du Prouveur, et d'envoi de ce défi audit Prouveur, ledit procédé est **caractérisé en ce que** le Prouveur est apte à transmettre audit Vérifieur un mot de passe à usage unique résultant de la transformation de la réponse générée par le Prouveur pour ledit défi en un format qui puisse être facilement mémorisable par un utilisateur, ladite réponse étant générée par le Prouveur à partir d'opérations de calculs effectuées à la fois en fonction du défi reçu, d'un code PIN saisi lors d'une étape précédente et d'un élément de cryptographie.

2. Procédé d'authentification selon la revendication précédente comprenant :

   1. une étape préalable de téléchargement d'un programme d'ordinateur à partir de la sélection d'un lien hypertexte compris dans un message reçu par ledit Prouveur, et
   2. une étape d'activation dudit programme d'ordinateur à partir d'éléments cryptographiques du Vérifieur et d'au moins un secret partagé entre le Prouveur et le Vérifieur.

3. Procédé selon l'une des revendications précédentes, comprenant une étape de vérification de la validité du défi reçu.

4. Procédé selon l'une des revendications précédentes, dans lequel le mot de passe à usage unique est chiffré avant d'être transmis au Vérifieur.

5. Procédé selon la revendication 2, dans lequel le secret partagé est un code d'activation généré par le Vérifieur et préalablement transmis au Prouveur.

6. Système d'authentification comportant un Prouveur et un Vérifieur, ledit Vérifieur étant apte à générer un défi en fonction d'une transaction donnée et de caractéristiques du Prouveur, et à transmettre ledit défi au Prouveur, **caractérisé en ce que** le Prouveur est apte à transmettre audit Vérifieur via un canal de communication un mot de passe à usage unique résultant de la transformation de la réponse générée pour ledit défi par les moyens de traitement du Prouveur en un format qui puisse être facilement mémorisable par un utilisateur, ladite réponse étant générée par le Prouveur à partir d'opérations de calculs effectuées à la fois en fonction du défi reçu, d'un code PIN saisi lors d'une étape précédente et d'un élément de cryptographie.

7. Système selon la revendication précédente, dans lequel le Prouveur est choisi parmi l'un des éléments suivants : un terminal mobile, et un terminal fixe.

8. Système selon l'une des revendications 6 ou 7, dans lequel le Vérifieur est un serveur d'authentification.

9. Système selon l'une des revendications précédentes 6 à 8, dans lequel ledit canal de communication à un débit de données faible.

10. Procédé d'authentification d'un Prouveur auprès d'un Vérifieur comportant des étapes de réception d'un défi généré par le Vérifieur en fonction d'une transaction donnée et des caractéristiques du Prouveur, et envoyé audit Prouveur par le Vérifieur, ledit procédé est **caractérisé en ce que** le Prouveur est apte à transmettre audit Vérifieur un mot de passe à usage unique résultant de la transformation de la réponse générée par le Prouveur pour ledit défi en un format qui puisse être facilement mémorisable par un utilisateur, ladite réponse étant générée par le Prouveur à partir d'opérations de calculs effectuées à la fois en fonction du défi reçu, d'un code PIN saisi lors d'une étape précédente et d'un élément de cryptographie.

11. Programme d'ordinateur comportant des instructions pour l'exécution des étapes du procédé d'authentification selon la revendication 10 lorsque ledit programme est exécuté par les moyens de traitement du Prouveur.

12. Programme d'ordinateur selon la revendication précédente, prévu pour être téléchargé à partir d'un lien hypertexte de sorte à être archivé dans les moyens de mémoire du Prouveur.

**Patentansprüche**

1. Verfahren zur Authentifizierung eines Beweisers bei einem Verifizierer, welches Schritte der Erzeugung, durch den Verifizierer, einer Challenge in Abhängigkeit von einer gegebenen Transaktion und den Merkmalen des Beweisers sowie des Sendens dieser Challenge an den Beweiser umfasst, wobei das Verfahren **dadurch gekennzeichnet ist, dass** der Beweiser in der Lage ist, an den Verifizierer ein Passwort zur einmaligen Verwendung zu übertragen, das aus der Umwandlung der von dem Beweiser erzeugten Response auf die Challenge in ein Format resultiert, welches durch einen Benutzer leicht speicherbar ist, wobei die Response von dem Beweiser durch Rechenoperationen erzeugt wird, die gleichzeitig in Abhängigkeit von der empfangenen Challenge, von einem PIN-Code, der in einem vorhergehenden Schritt eingegeben wurde, und von einem kryptographischen Element ausgeführt werden.

2. Verfahren zur Authentifizierung nach dem vorhergehenden Anspruch, welches umfasst:

   1. einen vorausgehenden Schritt des Herunterladens eines Computerprogramms anhand der Auswahl eines Hyperlinks, der in einer durch den Beweiser empfangenen Nachricht enthalten ist, und
   2. einen Schritt der Aktivierung dieses Computerprogramms anhand kryptographischer Elemente des Verifizierers und mindestens eines Geheimnisses, das von dem Beweiser und dem Verifizierer geteilt wird.

3. Verfahren nach einem der vorhergehenden Ansprüche, welches einen Schritt der Überprüfung der Gültigkeit der empfangenen Challenge umfasst.

4. Verfahren nach einem der vorhergehenden Ansprüche, wobei das Passwort zur einmaligen Verwendung verschlüsselt wird, bevor es an den Verifizierer übertragen wird.

5. Verfahren nach Anspruch 2, wobei das geteilte Geheimnis ein Aktivierungscode ist, der von dem Verifizierer erzeugt und vorab an den Beweiser übertragen wird.

6. Authentifizierungssystem, das einen Beweiser und einen Verifizierer umfasst, wobei der Verifizierer in der Lage ist, eine Challenge in Abhängigkeit von einer gegebenen Transaktion und von Merkmalen des Beweisers zu erzeugen und diese Challenge an den Beweiser zu übertragen, **dadurch gekennzeichnet, dass** der Beweiser in der Lage ist, an den Verifizierer über einen Kommunikationskanal ein Passwort zur einmaligen Verwendung zu übertragen, das aus der Umwandlung der durch die Verarbeitungsmittel des Beweisers erzeugten Response auf die Challenge in ein Format resultiert, welches durch einen Benutzer leicht speicherbar ist, wobei die Response von dem Beweiser durch Rechenoperationen erzeugt wird, die gleichzeitig in Abhängigkeit von der empfangenen Challenge, von einem PIN-Code, der in einem vorhergehenden Schritt eingegeben wurde, und von einem kryptographischen Element ausgeführt werden.

7. System nach dem vorhergehenden Anspruch, wobei der Beweiser eines der folgenden Elemente ist: ein mobiles Endgerät oder ein festes Endgerät.

8. System nach einem der Ansprüche 6 oder 7, wobei der Verifizierer ein Authentifizierungsserver ist.

9. System nach einem der vorhergehenden Ansprüche 6 bis 8, wobei der Kommunikationskanal eine niedrige Datenübertragungsrate aufweist.

10. Verfahren zur Authentifizierung eines Beweisers bei einem Verifizierer, welches Schritte des Empfangs einer Challenge umfasst, die von dem Verifizierer in Abhängigkeit von einer gegebenen Transaktion und den Merkmalen des Beweisers erzeugt wurde und von dem Verifizierer an den Beweiser gesendet wurde, wobei das Verfahren **dadurch gekennzeichnet ist, dass** der Beweiser in der Lage ist, an den Verifizierer ein Passwort zur einmaligen Verwendung zu übertragen, das aus der Umwandlung der von dem Beweiser erzeugten Response auf die Challenge in ein Format resultiert, welches durch einen Benutzer leicht speicherbar ist, wobei die Response von dem Beweiser durch Rechenoperationen erzeugt wird, die gleichzeitig in Abhängigkeit von der empfangenen Challenge, von einem PIN-Code, der in einem vorhergehenden Schritt eingegeben wurde, und von einem kryptographischen Element ausgeführt werden.

11. Computerprogramm, welches Anweisungen zur Ausführung der Schritte des Verfahrens zur Authentifizierung nach Anspruch 10, wenn das Programm durch die Verarbeitungsmittel des Beweisers ausgeführt wird, umfasst.

**12.** Computerprogramm nach dem vorhergehenden Anspruch, das dafür vorgesehen ist, über einen Hyperlink heruntergeladen zu werden, um in den Speichermitteln des Beweisers archiviert zu werden.

**Claims**

**1.** Method for authenticating a Prover with a Verifier comprising steps of generating, by the Verifier, a challenge as a function of a given transaction and of the characteristics of the Prover, and of dispatching this challenge to the said Prover, the said method is **characterized in that** the Prover is able to transmit to the said Verifier a one-time password resulting from the transformation of the response generated by the Prover for the said challenge into a format which may be easily memorisable by a user, the said response being generated by the Prover on the basis of calculation operations performed at one and the same time as a function of the challenge received, of a PIN code input during a preceding step and of a cryptography element.

**2.** Authentication method according to the preceding claim comprising:

1. a prior step of downloading a computer program on the basis of the selection of a hypertext link included in a message received by the said Prover, and
2. a step of activating the said computer program on the basis of cryptographic elements of the Verifier and of at least one secret shared between the Prover and the Verifier.

**3.** Method according to one of the preceding claims, comprising a step of verifying the validity of the challenge received.

**4.** Method according to one of the preceding claims, in which the one-time password is enciphered before being transmitted to the Verifier.

**5.** Method according to Claim 2, in which the shared secret is an activation code generated by the Verifier and previously transmitted to the Prover.

**6.** Authentication system comprising a Prover and a Verifier, the said Verifier being able to generate a challenge as a function of a given transaction and of characteristics of the Prover, and to transmit the said challenge to the Prover, **characterized in that** the Prover is able to transmit to the said Verifier via a communication channel a one-time password resulting from the transformation of the response generated for the said challenge by the processing means of the Prover into a format which may be easily memorisable by a user, the said response being generated by the Prover on the basis of calculation operations performed at one and the same time as a function of the challenge received, of a PIN code input during a preceding step and of a cryptography element.

**7.** System according to the preceding claim, in which the Prover is chosen from among one of the following elements: a mobile terminal, and a fixed terminal.

**8.** System according to one of Claims 6 or 7, in which the Verifier is an authentication server.

**9.** System according to one of the preceding Claims 6 to 8, in which the said communication channel has a low data throughput.

**10.** Method for authenticating a Prover with a Verifier comprising steps of receiving a challenge generated by the Verifier as a function of a given transaction and of the characteristics of the Prover, and dispatched to the said Prover by the Verifier, the said method is **characterized in that** the Prover is able to transmit to the said Verifier a one-time password resulting from the transformation of the response generated by the Prover for the said challenge into a format which may be easily memorisable by a user, the said response being generated by the Prover on the basis of calculation operations performed at one and the same time as a function of the challenge received, of a PIN code input during a preceding step and of a cryptography element.

**11.** Computer program comprising instructions for the execution of the steps of the authentication method according to Claim 10 when the said program is executed by the processing means of the Prover.

**12.** Computer program according to the preceding claim, devised to be downloaded from a hypertext link so as to be archived in the memory means of the Prover.

Envoi d'un OTP

Prouveur

Téléchargement
programme
d'ordinateur

Canal de communication

Vérifieur

Déclenchement
de l'envoi
du message

Envoi d'un défi

Serveur

FIGURE 1

EP 2 630 746 B1

**EP 2 630 746 B1**

## RÉFÉRENCES CITÉES DANS LA DESCRIPTION

**Documents brevets cités dans la description**

• WO 2007068099 A1